# EUROPÄISCHE PATENTSCHRIFT

(11) **EP 0 497 752 B1**
(45) Veröffentlichungstag und Bekanntmachung des Hinweises auf die Patenterteilung: **02.01.1997**
(21) Anmeldenummer: 92890011.7
(22) Anmeldetag: 15.01.1992
(51) Int. Cl.: H02H 9/04

(54) **Abtrennvorrichtung für Überspannungsableiter**
Disconnection device for surge arresters
Dispositif de débranchement pour dérivateurs de surtension

(30) Priorität: 31.01.1991 AT 205/91
(43) Veröffentlichungstag der Anmeldung: 05.08.1992
(73) Patentinhaber: FELTEN & GUILLEAUME AUSTRIA AG, 3943 Schrems-Eugenia 1 (AT)
(72) Erfinder: Biegelmeier, Gottfried, Prof.Ing.Dr.Phil., A-1195 Wien (AT)
(74) Vertreter: Beer, Manfred, Dipl.-Ing.

(56) Entgegenhaltungen:
- EP-A- 0 350 477
- DE-A- 3 707 307
- IEEE TRANSACTIONS ON INDUSTRY AND GENERAL APPLICATIONS Bd. IGA-3, Nr. 3, Mai 1967, New York US, Seiten 217-226; R.R. CONRAD : 'A new ground fault protective system for electrical distribution circuits'
- BULLETIN SCIENTIFIQUE DE L'ASSOCIATION DES INGENIEURS ELECTRICIENS SORTIS DE L'INSTITUT ELECTROTECHNIQUE MONTEFIORE Bd. 82, Nr. 3, September 1969, Liège, Belgien, Seiten 127-138; H. LOHEST : 'Technologie des disjoncteurs de terre à relais de courant'

## Beschreibung

Die Erfindung betrifft eine Abtrennvorrichtung für Überspannungsableiter mit den Merkmalen des Oberbegriffs des Anspruchs 1. Eine solche Schaltung ist aus der EP-A-0 350 477 bekannt.

Für das Abtrennen von schadhaften Überspannungsableitern (in der Folge kurz Ableiter genannt), um Fehlerspannungen in der geschützten Verbraucheranlage zu vermeiden, sind bereits verschiedene Möglichkeiten bekannt.

Eine schaltbare Abtrennvorrichtung wird z.B. in der EP 46545 beschrieben. Sie ist ähnlich wie ein Leitungsschutzschalter aufgebaut und kann nach dem Ansprechen wieder eingeschaltet werden.

Andere Konstruktionen bestehen aus einem Schmelzstreifen oder Schmelzdrähten aus Silber oder Kupfer, die mittels eines niedrigschmelzenden Lotes mit der Funkenstrecke oder dem spannungsabhängigen Widerstand im Ableiter verbunden sind. Sie können auch in Löschsand eingebettet sein.

Bei den meisten Konstruktionen ist die Abtrennvorrichtung so ausgebildet, daß der Ableiter zusammen mit der Abtrennvorrichtung nach dem Ansprechen der Abtrennvorrichtung nicht mehr verwendet werden kann und ausgewechselt werden muß (DE-B-975 252). Es können auch auswechselbare Schmelzeinsätze oder leitungsschutzschalterähnliche Konstruktionen verwendet werden (GB-A-2,010.613 und FR-B-812 674).

Alle diese Konstruktionen beginnen infolge der verwendeten Bimetallauslöser und Magnetauslöser und des geforderten niedrigen Durchgangswiderstandes des Ableiters erst im Amperebereich mit der Auslösung. Auch Lotverbindungen mit spannungsabhängigen Widerständen sind kaum besser zu dimensionieren.

Bereits Anfang der achtziger Jahre wurde deshalb erörtert, in die gemeinsame Erdungsleitung der Ableiter eine Überwachungseinrichtung einzubauen (VDE 0845 A1/4.81, Bestimmungen für den Schutz von Fernmeldeanlagen gegen Überspannungen, Bild 6a, Ausführungsbeispiel einer Überwachungseinrichtung bei einer transportablen Betriebsstätte), die nach dem Prinzip eines Fehlerstromschutzschalters aufgebaut ist. Derartige Lösungen beschreiben die EP-A-173 016 und 173 018. Um die erforderliche Auslöseverzögerung zu ermöglichen, sieht die EP-A-326 903 vor, daß in den Auslöserkreis eine Überwachungseinrichtung geschaltet ist, die ein UND-Gitter besitzt, von dem ein Eingang das Überschreiten eines bestimmten Fehlerstromes (Leckstromes) erfaßt und der zweite Eingang das Überschreiten einer bestimmten vorgegebenen Zeitdauer des Stromflusses signalisiert.

Ein weiterer Lösungsvorschlag wird in der EP-A-261 606 gemacht. Es wird eine Schutzschaltungsanordnung beschrieben, die für jeden einzelnen Strompfad, der von einer Netzleitung über den Ableiter geführt wird, eine Abschalteinrichtung vorsieht, wobei diese Strompfade hinter der Abschalteinrichtung zu einer gemeinsamen Erdungsleitung zusammengefaßt werden. In diese gemeinsame Leitung ist eine Überwachungseinrichtung nach dem Fehlerstromschutzschalterprinzip eingebaut.

Zur Gruppe dieser Lösungsvorschläge gehört die EP-A-385 832, die auch eine Kombination eines Fehlerstromschutzschalters mit einem Ableiter beschreibt.

Die vorgenannten Lösungen haben Fehler, die in AT-B 391 571 (≙ EP-A-0 350 477) beschrieben sind. Die in diesem Dokument vorgestellte Konstruktion hat zwei Vorteile. Beim Fließen eines Fehlerstromes in einem zugeordneten, schadhaft gewordenen Ableiter, wird dieser mittels eines Durchsteckstromwandlers erfaßt, dessen Sekundärwicklung mit einem netzspannungsunabhängigen, elektronischen Energiespeicherbaustein verbunden ist. Bei entsprechender Höhe des Fehlerstromes wird der Auslöser des Schaltschlosses der Abtrennvorrichtung impulsartig betätigt und dadurch die für das Ausschalten der Abtrennvorrichtung erforderliche Verzögerung erreicht. Außerdem kann durch die Energiespeicherung ein mechanisch robusterer und damit auch zuverlässigerer Permanentmagnetauslöser verwendet werden. Trotz der Energiespeicherung, wie sie z.B. in der DE-A-25 40 815 oder in CH-B-656 262 beschrieben wird, ist es nämlich wegen der geringen über den Durchsteckwandler übertragbaren Leistung nicht möglich, einen Arbeitsstromauslöser zu betätigen.

Bei der Anwendung von Permanentmagnetauslösern in Fehlerstromschutzschaltern haben sich jedoch Zuverlässigkeitsprobleme gezeigt. Auch bei Verwendung von netzspannungsabhängigen elektronischen Verstärkerschaltungen ergeben sich infolge der dauernd an Netzspannung liegenden elektronischen Bauelemente Schwierigkeiten.

Aus der EP-A-0 108 726 ist ein Fehlerstromschutzschalter bekannt, der aus einem Gehäuse mit Anschlußklemmen für Netzleitungen besteht, in dem ein Kontaktapparat mit zugehörigem Schaltschloß, ein Betätigungsorgan, ein elektromagnetischer Arbeitsstromauslöser für das Schaltschloß, ein Summenstromwandler und ein Thyristor mit einer Thyristorschaltstrecke untergebracht sind, wobei die Sekundärwicklung des Summenstromwandlers im Fehlerstromfall unabhängig von der Netzspannung den Kondensator einer Zeitverzögerungschaltung auflädt und beim Überschreiten des Auslösefehlerstromes der Thyristor durchzündet, wobei durch das Schließen der Thyristor schaltstrecke der Schloßauslöser netzspannungsabhängig das Schaltschloß betätigt, wodurch der Fehlerstromschutzschalter ausschaltet und danach der Thyristor in seinen nichtleitenden Zustand zurückkehrt.

Der Erfindung liegt die Aufgabe zugrunde, für Abtrennvorrichtungen für Ableiter eine Lösung anzubieten, welche die geschilderten Nachteile vermeidet. Die Lösung dieser Aufgabe erfolgt erfindungsgemäß durch die kennzeichnenden Merkmale des Anspruchs 1.

Anstelle einer unzuverlässigen, netzspannungsabhängigen Elektronik oder eines Permantentmagnetauslösers wird erfindungsgemäß die Sekundärwicklung des Summenstromwandlers mit einer netzspannungsunabhängigen Energiespeicherschaltung verbunden.

Bei entsprechender Höhe des Fehlerstromes im Durchsteckwandler wird die Energiespeicherschaltung zeitabhängig aufgeladen und gibt nach Erreichen der Schwellenspannung eines spannungsabhängigen, elektronischen Schaltbausteines einen Schaltimpuls auf ein Relais (in der Folge Wandlerrelais genannt) ab. Dadurch wird im Wandlerrelais ein Kontakt geschlossen, wodurch ein elektromagnetischer Arbeitsstromauslöser für das Auslösen des Schaltschlosses (in der Folge kurz Schloßauslöser genannt) vom Netz den notwendigen Erregerstrom erhält und die Abtrennvorrichtung ausschaltet.

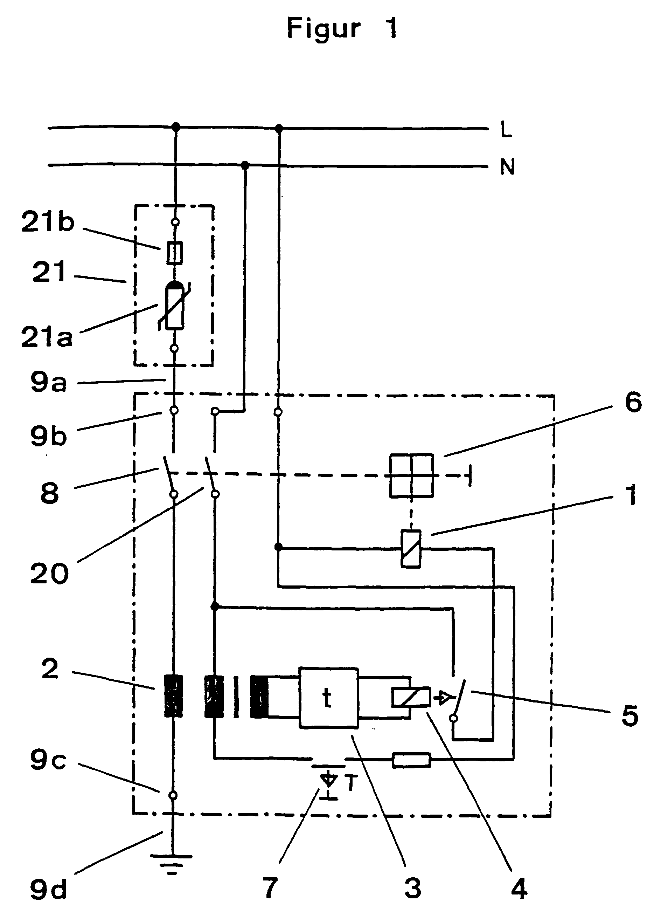

In bekannter Weise kann der Stromkreis für den Schloßauslöser und der Prüfstromkreis durch einen Unterbrecherkontakt im Kontaktapparat von einer Netzleitung getrennt werden (Fig. 1).

Das Wandlerrelais kann entweder ein elektromechanisches oder ein elektronisches Relais, z.B. mit einer Thyristorschaltung sein. Als elektromechanisches Relais kann es entweder monostabil oder bistabil ausgeführt sein.

Bei einem monostabilen Wandlerrelais wird gemäß einem Vorschlag der Erfindung der Relaiskontakt durch den von der Energiespeicherschaltung kommenden Auslöseimpuls kurzzeitig geschlossen, wobei die elektrischen Kenngrößen der Energiespeicherschaltung und der Wicklung des Wandlerrelais so aufeinander abgestimmt sind, daß der Auslöseimpuls und damit die Einschaltdauer des Relaiskontaktes lang genug sind, um den Schloßauslöser sicher zu betätigen. Nach diesem Vorgang kehrt das monostabile Wandlerrelais selbsttätig in seine Ausgangsstellung zurück.

Wird ein bistabiles Wandlerrelais verwendet, kann das Wandlerrelais nach dem Impuls und den dadurch eingeleiteten Schaltvorgang in seine Ausgangslage rückgestellt werden. Dies kann erfindungsgemäß elektrisch oder mechanisch erfolgen, wodurch der Relaiskontakt wieder geöffnet wird.

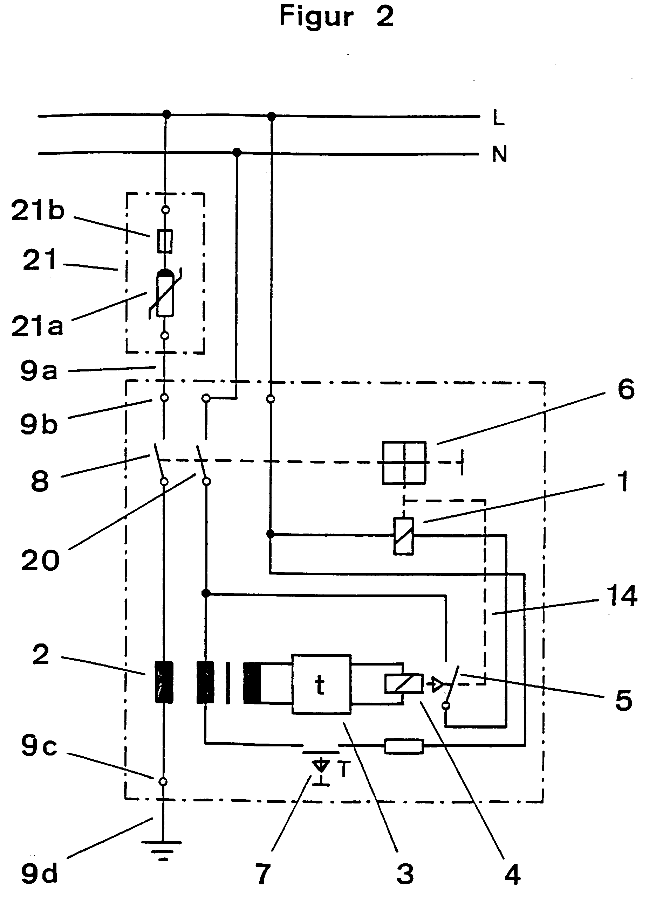

Das mechanische Rückstellen kann erfindungsgemäß erfolgen, indem, ähnlich wie bei Permanentmagnetauslösern der klassischen FI-Schalterkonstruktionen, bei der Ausschaltbewegung des Schaltschlosses durch eine mechanische Kopplung das bistabile Wandlerrelais in seine Ausgangslage gebracht wird (Fig. 2).

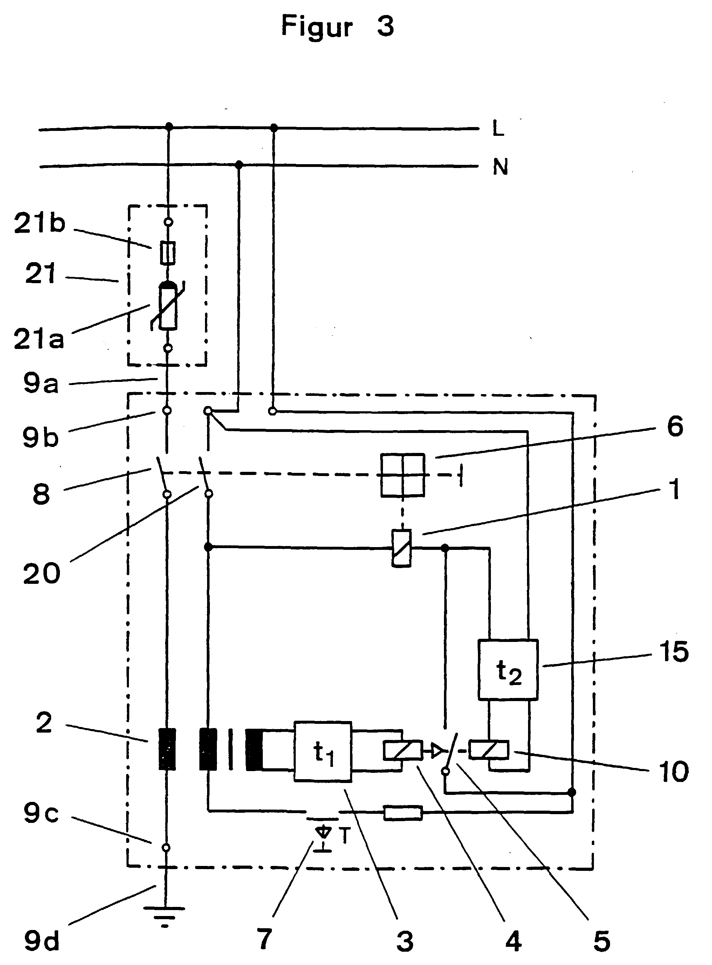

Das elektrische Rückstellen kann erfindungsgemäß durch eine zusätzliche Betätigungsspule des Wandlerrelais erfolgen, die durch das Schließen des Relaiskontaktes den Erregerstrom vom Netz erhält (Fig. 3).

Diese Spule kann dabei erfindungsgemäß über eine Zeitverzögerungsschaltung mit den Netzleitungen verbunden sein, wobei beim Ausschalten der Abtrennvorrichtung mittels eines Unterbrecherkontaktes im Kontaktapparat die Verbindung mit einer Netzleitung unterbrochen wird.

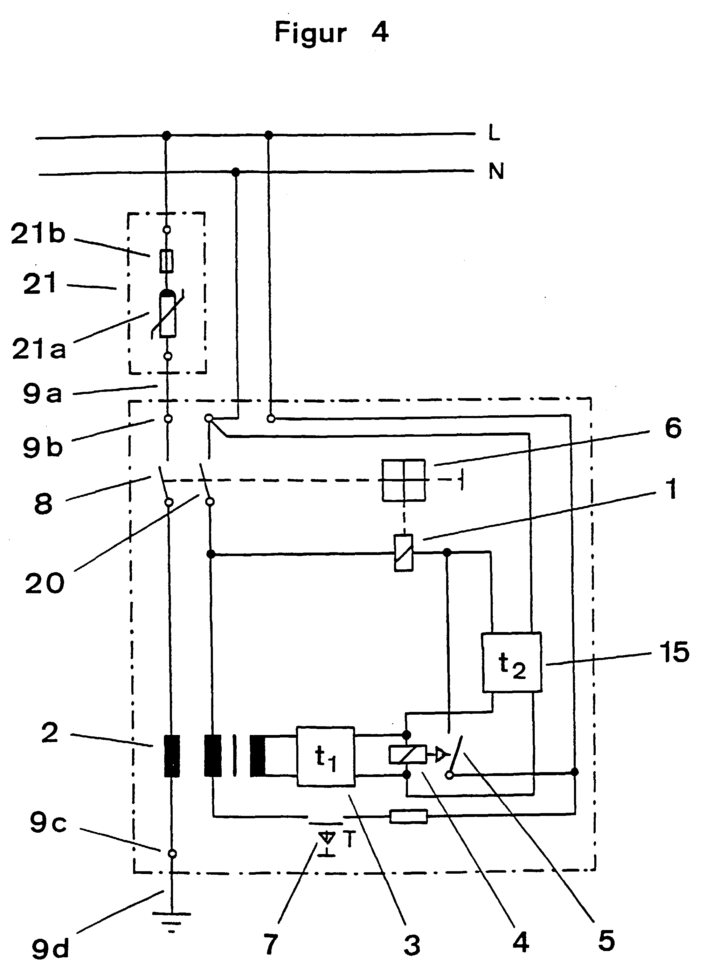

Das elektrische Rückstellen kann erfindungsgmäß auch mit der Betätigungsspule des Wandlerrelais erfolgen, die mit der Energiespeicherschaltung für die Fehlerstromauslösung verbunden ist. Der Auslösekreis ist ja von den Netzleitungen galvanisch getrennt, womit die Spule erfindungsgemäß an einen zweiten Stromkreis angeschlossen werden kann, der mit den Netzleitungen verbunden ist. Dieser Stromkreis enthält eine Zeitverzögerungsschaltung und den Kontakt des Wandlerrelais (Fig. 4).

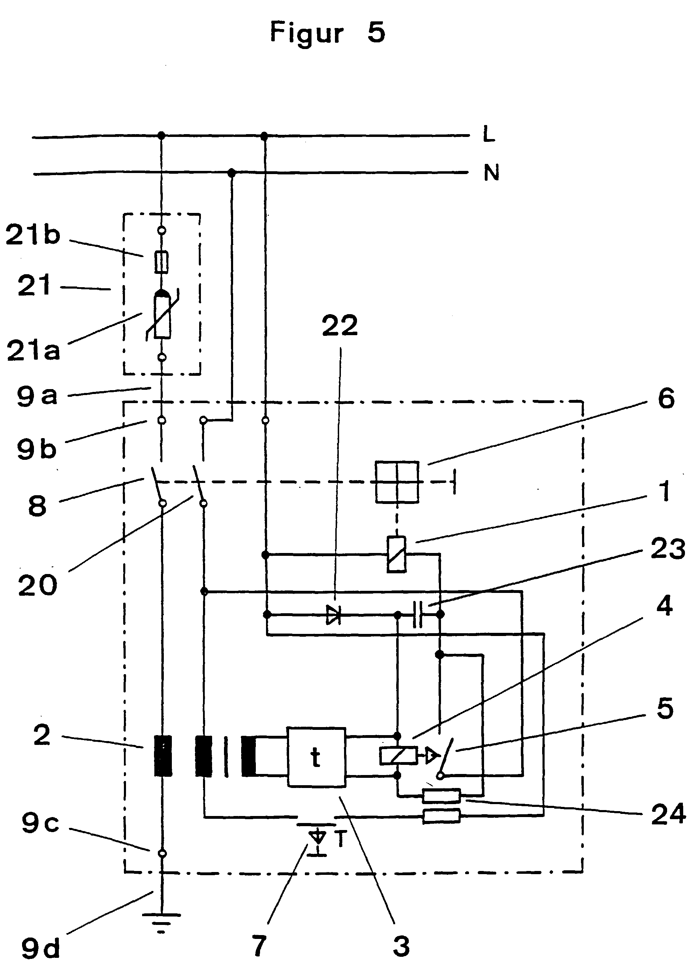

Erfindungsgemäß kann auch ein monostabiles Wandlerrelais durch einen elektrischen Stromkreis in der Einstellung des Schließkontaktes so lange gehalten werden, bis durch den Schloßauslöser die Abtrennvorrichtung ausgeschaltet hat. Dieser Haltestromkreis ist über einen Unterbrecherkontakt, der durch das Schaltschloß der Abtrennvorrichtung betätigt wird, mit den Netzleitungen verbunden (Fig. 5). Daß die erfindungsgemäßen Ausführungsformen einer Abtrennvorrichtung eine Auslösezuverlässigkeit haben, die um Größenordnungen höher ist als die derzeit auf dem Markt befindlichen Konstruktionen von FI-Schaltern ist leicht zu verstehen. Sowohl der Schloßauslöser als auch das Wandlerrelais haben bei den geringen Schalthäufigkeiten einer Abtrennvorrichtung eine sehr hohe Lebensdauer. Der Schloßauslöser kann ja so robust wie die üblichen Auslöser von Leitungsschutzschaltern gebaut werden und auch das Schaltschloß der Abtrennvorrichtung kann dem eines Leitungsschutzschalters prinzipiell entsprechen.

Ist das Wandlerrelais als bistabiles elektromechanisches Relais ausgeführt, dann kann es bei elektrischer Rückstellung vollkommen hermetisch geschlossen sein, ebenso wie bei der Ausführung als monostabiles elektromechanisches Relais mit angepaßter Impulsform oder elektrischer Selbsthaltung. Aber auch bei mechanischer Rückstellung entfallen bei einem bistabilen Relais die Klebeerscheinungen der bisher üblichen Permanentmagnetauslöser.

Ist das Wandlerrelais als elektronisches Relais ausgeführt, z.B. als Thyristorschaltung, die durch den Impuls der netzspannungsunabhängigen Energiespeicherschaltung leitend wird (Schließkontakt), dann kann zwar bei einem Halbleiter im Fehlerfall eine Unterbrechung auftreten, aber unter den gegebenen Betriebsbedingungen ist dies äußerst unwahrscheinlich, sodaß die Ausfallsrate der Thyristorschaltung wesentlich geringer ist, als wenn eine netzspannungsabhängige Elektronikschaltung für das Erfassen des Fehlerstromsignals verwendet wird.

Auch die elektronischen Bauelemente der netzspannungsunabhängigen Energiespeicherschaltung haben eine sehr hohe Lebensdauer. Diese Bauelemente befinden sich ja, wenn kein Fehlerstrom fließt, die meiste Zeit in einem spannungslosen Betriebszustand. Dementsprechend hoch sind ihre Zuverlässigkeitskennzahlen.

Damit ist mit der erfindungsgemäßen Abtrennvorrichtung das Ziel erreicht, eine Zuverlässigkeit der Auslösung in der gleichen Größenordnung zu erreichen, wie sie bei den Leitungsschutzschaltern üblich ist. Der alte Einwand, daß die Funktion des Arbeitsstromauslösers von der Netzspannung abhängt, ist ebenso wenig stichhaltig wie die alten Vorhalte, daß die Nullung wegen der Außenleiter oder Nulleiterunterbrechung nicht zuverlässig sei.

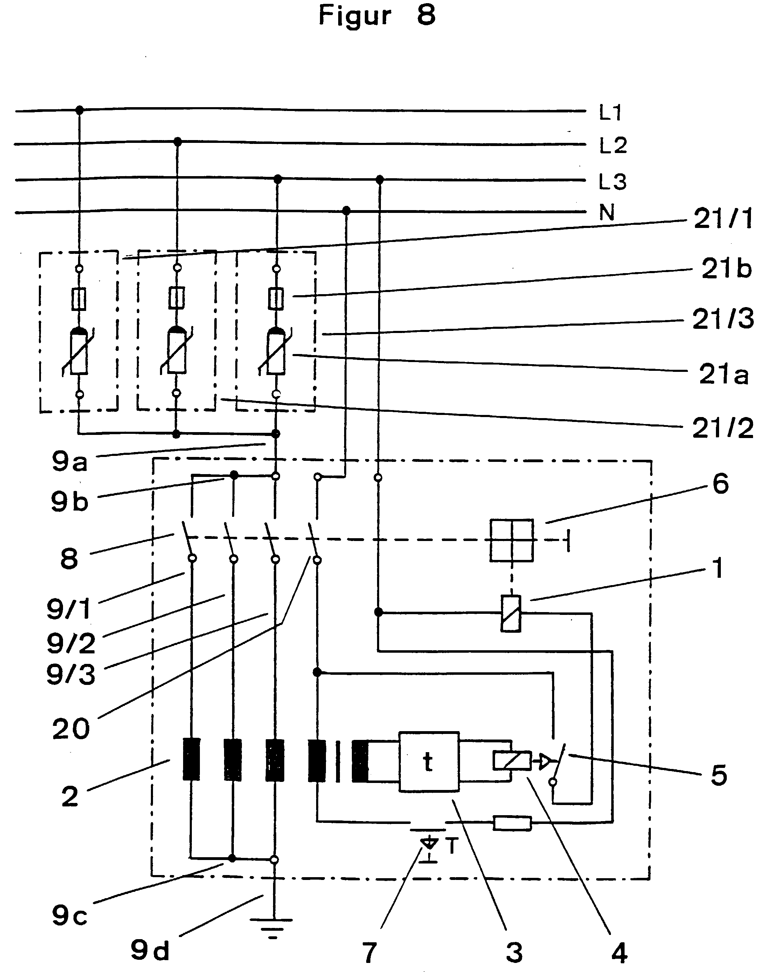

Eine kostensparende Lösung für eine erfindungsgemäße Ableitertrennvorrichtung stellt auch die Verwendung eines Fehlerstromschutzschalters mit hoher Auslösezuverlässigkeit dar. Man kann dazu die Unterbrecherkontakte einer oder mehrerer Hauptstrombahnen für die Unterbrechung der gemeinsamen Erdungsleitung der zugeordneten Ableiter benützen und einen Unterbrecherkontakt für die Ausschaltung des Stromkreises, der den Schloßaulöser mit Netzenergie betätigt (Fig. 8).

Es genügt einige elektrische Parameter der elektronischen Schaltung an die für eine Abtrennvorrichtung für Überspannungsableiter gestellten Anforderungen (z.B. längere Ausschaltzeiten) anzupassen.

Ebenso können bei allen erfindungsgemäßen Lösungen im Wandler-Stromkreis und im Stromkreis des Schloßauslösers in bekannter Weise Überspannungsschutzelemente, wie Dioden oder Varistoren an den geeigneten Stellen eingebaut werden.

Im folgenden wird die Erfindung anhand der in den Figuren 1 bis 8 gezeigten Ausführungsbeispiele beschrieben.

Es zeigt
Fig. 1 eine Abtrennvorrichtung mit einem monostabilen Wandlerrelais,
Fig. 2 eine Abtrennvorrichtung mit einem bistabilen Wandlerrelais und mechanischer Rückstellung,
Fig. 3 eine Abtrennvorrichtung mit einem bistabilen Wandlerrelais mit Rückstellspule und elektrischer Rückstellung,
Fig. 4 eine Abtrennvorrichtung wie bei Fig. 3 mit einem bistabilen Wandlerrelais mit nur einer Relaisspule und elektrischer Rückstellung,
Fig. 5 eine Zeitverzögerungsschaltung für den Hilfsstromkreis eines bistabilen Wandlerrelais,
Fig. 6 eine Schaltung für einen netzspannungsunabhängigen Energiespeicherbaustein,
Fig. 7 Zeitverzögerungsschaltungen für die Betätigungs- und Rückstellspule eines bistabilen Wandlerrelais,
Fig. 8 eine Abtrennvorrichtung bestehend aus einem vierpoligen Fehlerstromschutzschalter in Sonderausführung.

Die in Fig. 1 gezeigte, erfindungsgemäße Abtrennvorrichtung arbeitet mit einem monostabilen Wandlerrelais 4. Die Sekundärwicklung eines Durchsteckwandlers 2 ist über eine netzspannungsunabhängige Energiespeicherschaltung 3 mit dem monostabilen Wandlerrelais 4 verbunden. Überschreitet der Fehlerstrom in der Primärwicklung des Durchsteckwandlers 2 einen vorbestimmten Wert, dann gibt die Energiespeicherschaltung einen ausreichend langen Betätigungsimpuls auf das Wandlerrelais 4, wodurch der Relaiskontakt 5 so lange geschlossen wird, daß bei eingeschalteter Abtrennvorrichtung der Schloßauslöser 1 das Schaltschloß 6 sicher betätigt. Dadurch werden der Kontakt 8 und der Kontakt 20 geöffnet. Das monostabile Wandlerrelais 4 kehrt wieder in seine Ausgangslage zurück, wodurch der Relaiskontakt 5 geöffnet wird und die Abtrennvorrichtung zum Wiedereinschalten von Hand aus bereit ist.

Ein Ableiter 21 mit einer eingebauten Trennvorrichtung 21b und einem spannungsabhängigen Widerstand 21a ist über die Erdungsleitung 9a, 9d mit den Anschlußklemmen 9b, 9c der Ableitertrennvorrichtung und einem Erder verbunden.

Die erfindungsgemäßen Abtrennvorrichtungen können auch mit den üblichen Prüfeinrichtungen 7 ausgestattet sein.

Die erfindungsgemäße Abtrennvorrichtung gemäß Fig. 2 arbeitet mit einem bistabilen Wandlerrelais 4. Die Sekundärwicklung des Durchsteckwandlers 2 ist wieder über eine netzspannungsunabhängige Energiespeicherschaltung 3 mit dem bistabilen Wandlerrelais 4 verbunden. Überschreitet der Fehlerstrom in der Primärwicklung des Durchsteckwandlers 2 einen vorbestimmten Wert, dann gibt die Energiespeicherschaltung 3 einen Betätigungsimpuls auf das Wandlerrelais 4 ab, wodurch der Relaiskontakt 5 geschlossen wird und zunächst in dieser Lage bleibt. Damit wird bei eingeschalteter Abtrennvorrichtung der Schloßauslöser 1 durch den vom Netz kommenden Erregerstrom betätigt und löst das Schaltschloß 6 aus. Dadurch werden der Kontakt 8 und der Kontakt 20 geöffnet. Während des Ausschaltvorganges wird durch eine mechanische Kopplung 14 das bistabile Wandlerrelais 4 vom Schaltschloß 1 wieder in seine Ausgangslage gebracht und die Abtrennvorrichtung ist zum Wiedereinschalten von Hand aus bereit.

Die erfindungsgemäße Abtrennvorrichtung von Fig. 3 arbeitet ebenfalls mit einem bistabilen Wandlerrelais 4. Die Sekundärwicklung des Durchsteckwandlers 2 ist wieder mit einer netzspannungsunabhängigen Energiespeicherschaltung 3 verbunden. Die Funktion beim Auslösen ist die gleiche wie bei der an Hand von Fig. 2 beschriebenen Abtrennvorrichtung. Das Rückstellen des bistabilen Wandlerrelais 4 erfolgt hier aber elektrisch durch eine Zeitverzögerungsschaltung 15, die netzspannungsabhängig arbeitet und durch die über die Rückstellspule 10 der Relaiskontakt 5 in seine Ausgangslage gebracht wird.

Fig. 4 zeigt eine erfindungsgemäße Abtrennvorrichtung, die ebenfalls mit einem bistabilen Wandlerrelais 4 arbeitet. Die Funktion ist die gleiche wie die an Hand der Fig. 2 und 3 beschriebene. Der Unterschied besteht nur darin, daß das bistabile Wandlerrelais 4 nur eine Relaisspule besitzt, die sowohl für das Auslösen der Abtrennvorrichtung durch den Schloßauslöser 1 benutzt wird als auch zum Rückstellen des Relaiskontaktes 5 dient. Das Rückstellen erfolgt wieder durch eine geeignete Zeitverzögerungsschaltung 15, die netzspannungsabhängig arbeitet und netzseitig mit den Netzleitungen verbunden ist.

Fig. 5 zeigt beispielhaft die Schaltung für ein monostabiles Wandlerrelais mit Selbsthaltung über einen Stromkreis mit dem Gleichrichter 22, einem Glättungskondensator 23 und dem Widerstand 24. Wird das Relais durch den Impuls von der netzspannungsunabhängigen Energiespeicherschaltung 3 betätigt und damit der Kontakt 5 geschlossen, dann wird das Relais in der Schließstellung durch den Haltestrom, der über den Gleichrichter 22 durch die Relaisspule fließt, so lange gehalten, bis der Schloßauslöser angesprochen hat und die Abtrennvorrichtung mit dem Kontakt 8 und damit auch der Kontakt 20 ausgeschaltet haben.

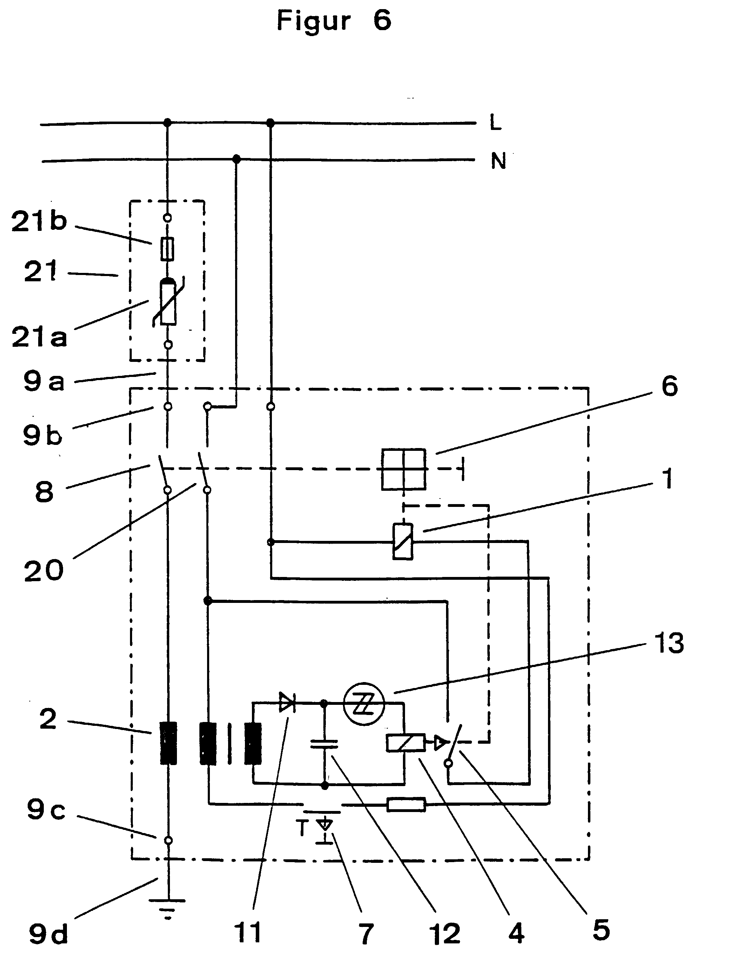

Fig. 6 zeigt beispielhaft eine Schaltung für die netzspannungsunabhängige Energiespeicherschaltung 3, die aus einer Gleichrichterschaltung 11 und einem Halbleiterbaustein 13 besteht, die beim Fließen des Fehlerstromes im Durchsteckwandler 2 einen Speicherkondensator 12 auflädt.

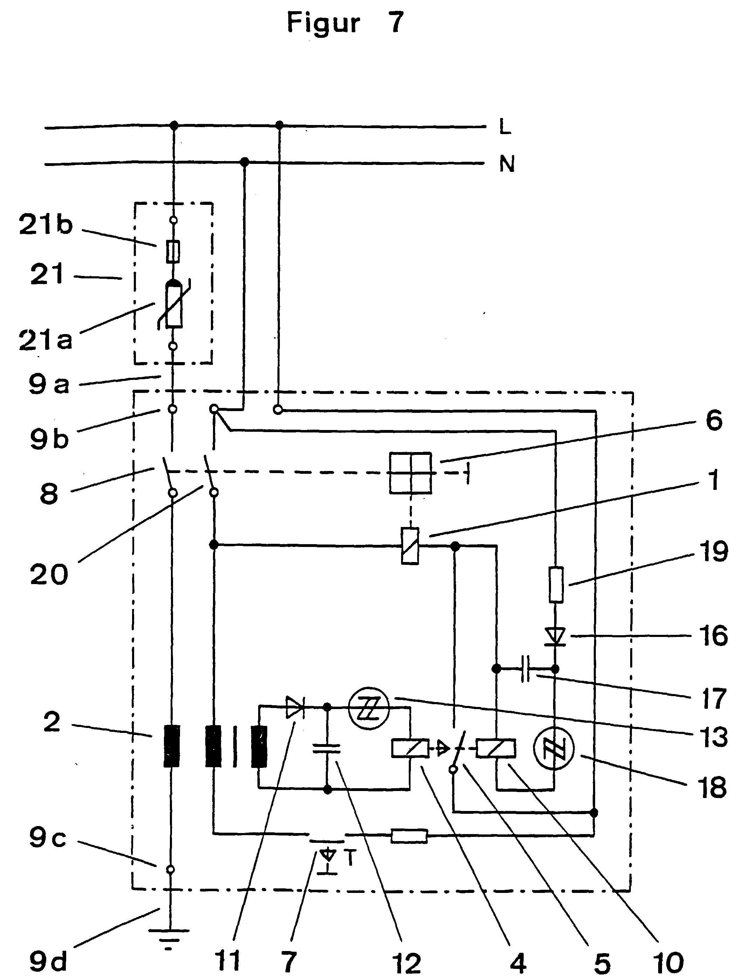

Fig. 7 zeigt beispielhaft eine Zeitverzögerungsschaltung für das elektrische Rückstellen des bistabilen Wandlerrelais mit einem Halbleiterbaustein 18. Das Aufladen des Speicherkondensators 17 erfolgt netzspannungsabhängig über den Ladewiderstand 19 und eine Gleichrichterschaltung 16.

Fig. 8 zeigt beispielhaft eine Abtrennvorrichtung unter Verwendung eines, vierpoligen Fehlerstromschutzschalters. Es werden drei Ableiter 21/1, 21/2 und 21/3 eines Drehstromnetzes geschützt. Die gemeinsame Erdungsleitung 9a verbindet die parallelgeschalteten Erdungsklemmen der Ableiter mit den parallelgeschalteten Anschlußklemmen 9b und damit auch mit den parallelgeschalteten Hauptstrombahnen 9/1, 9/2 und 9/3 des Fehlerstromschutzschalters. Die parallelgeschalteten Klemmen 9c werden über die Erdungsleitung 9d mit einem Erder verbunden. Drei Kontakte des Kontaktapparates 8 des vierpoligen Fehlerstromschutzschalters werden für die Unterbrechung des Fehlerstromes verwendet. Der vierte Kontakt dient für das Unterbrechen des Stromkreises für den Schloßauslöser 1 und den Prüfstromkreis 7.

## Patentansprüche

1. Abtrennvorrichtung für Überspannungsableiter, bestehend aus einem Gehäuse mit Anschlußklemmen, in dem eine Stromunterbrechungseinrichtung mit einem Unterbrecherkontakt (2) angeordnet ist, mit einem Schaltmechanismus bestehend aus einem Schloßauslöser (1) und einem Schaltschloß (6) mit Freiauslösung und einer manuellen Betätigungsorgan für das Rückstellen des Schaltschlosses (6) und des Unterbrecherkontaktes für die gemeinsame Erdungsleitung der zugeordneten Ableiter, wobei die gemeinsame Erdungsleitung die Primärwicklung eines Durchsteck-Stromwandlers (7,8) bildet und dessen Sekundärwicklung (8) mit einer netzspannungsunabhängigen, elektronischen Energiespeicherschaltung (3), die aus einer Gleichrichterschaltung (11), einem Speicherkondensator (12) und einem spannungsabhängigen, elektronischen Schaltbaustein (13) besteht, verbunden ist, dadurch gekennzeichnet, daß ein Schaltschloß vorgesehen ist, dessen Robustheit der eines Leitungsschutzschalters vergleichbar ist, daß ein Relais (4) oder ein Thyristor mit dazugehörigem Schließkontakt bzw. Thyristorschaltstrecke mit der Energiespeicherschaltung (3) elektrisch verbunden ist, wobei beim Überschreiten eines durch den spannungsabhängigen elektronischen Schaltbaustein (13) festgelegten Grenzwertes des Fehlerstromes in der Erdungsleitung (9a, 9d) durch die Energiespeicherschaltung (3) das Relais (4) betätigt bzw. der Thyristor gezündet wird, daß der Relaiskontakt (5) bzw. die Thyristorschaltstrecke in der Leitung vorgesehen ist, über die der Schloßauslöser (1) unter Netzspannung steht, so daß der Schloßauslöser (1) beim Schließen des Relaiskontaktes (5) bzw. der Thyristorschaltstrecke das Schaltschloß (6) netzspannungsabhängig betätigt und damit die Abtrennvorrichtung ausschaltet und daß danach das Relais (4) wieder seinen Ausgangszustand annimmt bzw. der Thyristor seinen nichtleitenden Zustand einnimmt.

2. Abtrennvorrichtung nach anspruch 1, dadurch gekennzeichnet, daß das Relais (4) als monostabiles Relais ausgebildet ist, das durch den Impuls der Energiespeicherschaltung (3) seinen Arbeitskontakt (5) kurzzeitig schließt wobei die elektrischen Daten der Energiespeicherschaltung und der Wicklung des Relais, so aufeinander abgestimmt sind, daß der Auslöseimpuls und damit die Einschaltdauer des Relaiskontaktes (5) lang genug sind, um den Schloßauslöser (1) des Schaltschlosses (6) zu betätigen.

3. Abtrennvorrichtung nach Anspruch 1, dadurch gekennzeichnet, daß das Relais (4) als bistabiles Relais ausgeführt ist, das durch den Impuls der Energiespeicherschaltung (3) einen Arbeitskontakt (5) schließt und damit den Schloßauslöser (1) des Schaltschlosses (6) betätigt, und durch den Ausschaltvorgang die Rückstellung des Relais (4) in seine Ausgangsstellung mittels einer mechanischen Kupplung (14) mit dem Schaltschloß (6) erfolgt.

4. Abtrennvorrichtung nach Anspruch 1, dadurch gekennzeichnet, daß das Relais (4) als bistabiles Relais ausgeführt ist, das durch den Impuls der Energiespeicherschaltung (3) einen Arbeitskontakt (5) schließt und damit den Schloßauslöser (1) des Schaltschlosses (6) betätigt und daß zum Rückstellen des Relais (4) eine zusätzliche Betätigungsspule (10) des Relais vorgesehen ist, die über eine Zeitverzögerungsschaltung (15) mit den Netzleitungen verbunden ist.

5. Abtrennvorrichtung nach Anspruch 1, dadurch gekennzeichnet, daß das Relais (4) als bistabiles Relais ausgeführt ist, das durch den Imupls der Energiespeicherschaltung (3) einen Arbeitskontakt (5) schließt und damit den Schloßauslöser (1) des Schaltschlosses (6) betätigt und daß zum Rückstellen des Relais nur eine Betätigungsspule (10) vorgesehen ist, die nicht nur mit der Energiespeicherschaltung (3), sondern auch über eine Zeitverzögerungsschaltung (15) mit den Netzleitungen verbunden ist.

6. Abtrennvorrichtung nach Anspruch 1, dadurch gekennzeichnet, daß das Relais (4) als monostabiles Relais ausgeführt ist, das durch den Impuls der Energiespeicherschaltung (3) einen Arbeitskontakt (5) schließt und damit den Schloßauslöser (1) des Schaltschlosses (6) betätigt, wobei das Relais mittels Selbsthaltung über einen Stromkreis, der mit den Netzleitungen verbunden ist und eine Halteschaltung darstellt, so lange in der Einschaltstellung bleibt, bis die Abtrennvorrichtung ausgeschaltet hat und damit der Haltestromkreis unterbrochen wird.

7. Abtrennvorrichtung nach Anspruch 1, dadurch gekennzeichnet, daß das Relais (4) als elektronisches Relais ausgeführt ist, bei dem ein Halbleiter-Schaltbaustein durch den Impuls, der von der Energiespeicherschaltung (3) kommt, leitend wird und nach dem Ausschalten der Abtrennvorrichtung wieder der Sperrzustand eintritt.

8. Abtrennvorrichtung nach einem der Ansprüche 4 und 5, dadurch gekennzeichnet, daß die Zeitverzögerungsschaltung (15) aus einer Gleichrichterschaltung (16), einem Speicherkondensator (17) und einem spanngsabhängigen, elektronischen Schaltbaustein (18) besteht und über einen Ladewiderstand (19) netzspannungsabhängig mit Energie versorgt wird.

9. Abtrennvorrichtung nach einem der Ansprüche 1 bis 8, dadurch gekennzeichnet, daß das manuelle Betätigungsorgan für das Rückstellen des Schaltmechanismus (6) nur für das Einschalten, aber nicht für das Ausschalten der Abtrennvorrichtung ausgebildet ist.

10. Abtrennvorrichtung nach einem der Ansprüche 1 bis 9, dadurch gekennzeichnet, daß sie einem abgeänderten Fehlerstromschutzschalter entspricht, bei dem die Unterbrecherkontakte einer oder mehrerer Hauptstrombahnen (9/1, 9/2, 9/3) für das Unterbrechen der gemeinsamen Erdungsleitungen (9a, 9d), der zugeordneten Ableiter (21/1, 21/2, 21/3) benutzt werden.

## Claims

1. An isolating device for overvoltage arresters, consisting of a housing with terminals, in which is arranged a current interrupting device with an interrupter contact (8), with a switch mechanism consisting of a latch release (1) and a latch (6) with trip-free release and a manual actuating member for resetting the latch (6) and the interrupter contact for the common earth line of the associated arresters, wherein the common earth line forms the primary winding of a current transformer (2) whose secondary winding is connected to an electronic energy storage circuit (3) which is independent of the mains voltage and consists of a rectifier circuit (11), a storage capacitor (12) and a voltage-dependent electronic component (13), characterized in that a latch is provided whose robustness is comparable to that of a line protection switch, in that a relay (4) or a thyristor with a closing contact thereof or a thyristor circuit path is electrically connected to the energy storage circuit (3), wherein the relay (4) is operated or the thyristor is fired by tile energy storage circuit (3) on overstepping a limit value of the fault current in the earth line (9a, 9d) set by the voltage dependent electronic component (13), in that the relay contact (5) or the thyristor circuit path is provided in the line through which the latch release (1) has mains voltage applied thereto, so that the latch release (1) actuates the latch (6) in dependence on the mains voltage when the relay contact (5) or the thyristor circuit path is closed and thus cuts out the isolating device and in that the relay (4) then reassumes its initial state or the thyristor assumes its non-conductive state.

2. An isolating device according to claim 1, characterized in that the relay (4) is in the form of a monostable relay which closes its working contact (5) briefly through the pulse of from the energy storage circuit (3), the electrical properties of the energy storage circuit and the winding of the relay being so matched to each other that the tripping pulse and thus the duration of switch-on of the relay contact (5) are long enough for the latch release (1) of the latch (6) to operate.

3. An isolating device according to claim 1, characterized in that the relay (4) is in the form of a bistable relay which closes a working contact through the pulse from the energy storage circuit (3) and thus actuates the latch release (1) of the latch (6), and the resetting of the relay (4) to its initial state is effected through the cut-out operation by means of a mechanical coupling (14) with the latch (6).

4. An isolating device according to claim 1, characterized in that the relay (4) is in the form of a bistable relay which closes a working contact (5) through the pulse from the energy storage circuit (3) and thus actuates the latch release (1) of the latch (6), and in that an additional actuating coil (10) of the relay is provided for resetting the relay (4) and is connected to the mains lines through a time delay circuit (15).

5. An isolating device according to claim 1, characterized in that the relay (4) is in the form of a bistable relay which closes a working contact (5) through the pulse from the energy storage circuit (3) and thus actuates the latch release (1) of the latch (6), and in that only one actuating coil (10) is provided for resetting the relay (4) and is connected not only to the energy storage circuit (3) but also to the mains lines through a time delay circuit (15).

6. An isolating device according to claim 1, characterized in that the relay (4) is in the form of a monostable relay which closes a working contact (5) through the pulse from the energy storage circuit (3) and thus actuates the latch release (1) of the latch (6), wherein the relay remains, by virtue of self-holding through a circuit which is connected to the mains lines and forms a hold circuit, long enough in the switched on state for the isolating device to cut out and the hold circuit thus to be broken.

7. An isolating device according to claim 1, according to the relay (4) is implemented as an electronic relay, in which a semiconductor component is rendered conductive by the pulse which comes from the energy storage circuit (3) and reenters the blocked state after the isolating device has cut out.

8. An isolating device according to claim 4 or 5, characterized in that the time delay circuit (15) consists of a rectified circuit (16), a storage capacitor (17) and a voltage dependent electronic component (18) and is supplied with energy in dependence on the mains voltage through a charging resistor (19).

9. An isolating device according to any of claims 1 to 8, characterized in that the manual actuating member for resetting the switch mechanism (6) is designed only for switching on but not for cutting out the isolating device.

10. An isolating device according to any of claims 1 to 9, characterized in that it corresponds to a modified fault current protective switch, in which the interruptor contacts of one or more main current paths (9/1, 9/2, 9/3) are used for interrupting the common earth lines (9a, 9d) of the associated arresters (21/1, 21/2, 21/3).

## Revendications

1. Dispositif de séparation pour dispositifs de dérivation des surtensions, comprenant un boîtier avec des bornes de connexion, à l'intérieur duquel est disposé un dispositif d'interruption du courant avec un contact (8) d'interrupteur, avec un mécanisme de commutation comprenant un déclencheur (1) et un verrou de maintien (6) à déclenchement automatique et avec un organe d'actionnement pour le réarmement du verrou (6) de maintien et du contact d'interrupteur pour la ligne commune de mise à la terre des dispositifs de dérivation associés, la ligne commune de mise à la terre constituant l'enroulement primaire d'un transformateur de courant (2), tandis que l'enroulement secondaire de celui-ci est connecté à un circuit (3) électronique d'accumulation d'énergie, indépendant de la tension du réseau, formé d'un circuit redresseur (11), d'un condensateur (12) d'accumulation et d'un composant (13) électronique de commutation, asservi à la tension, caractérisé par le fait qu'il est prévu un verrou de maintien dont la robustesse est comparable à celle d'un disjoncteur de protection de ligne, par le fait qu'un relais (4) ou un thyristor, pourvu d'un contact de fermeture correspondant, ou un circuit de commutation à thyristor est connecté électriquement au circuit (3) d'accumulation d'énergie, le relais (4) étant actionné ou le thyristor étant amorcé par le circuit (3) d'accumulation d'énergie lorsque le courant de défaut dans la ligne de terre (9a, 9d) de terre dépasse un seuil fixé par le composant (13) électronique de commutation, asservi à la tension, par le fait que le contact (5) de relais ou le circuit de commutation à thyristor est prévu dans la ligne par l'intermédiaire de laquelle la tension du réseau est appliquée au déclencheur (1), de sorte que, lors de la fermeture du contact (5) de relais ou du circuit de commutation à thyristor, le verrou de maintien (6) soit actionné de manière asservie à la tension du réseau et commute à l'état ouvert le dispositif de séparation et qu'ensuite, le relais (4) revient à son état initial ou le thyristor revient à son état bloquant.

2. Dispositif de séparation selon la revendication 1, caractérisé par le fait que le relais (4) est un relais monostable qui, sous l'impulsion délivrée par le circuit (3) d'accumulation d'énergie, ferme pendant un court instant son contact (5) de travail, les caractéristiques électriques du circuit d'accumulation d'énergie et de l'enroulement du relais étant mutuellement adaptées de telle sorte que l'impulsion de déclenchement et ainsi la durée de fermeture du contact (5) de relais soient suffisamment longues pour actionner le déclencheur (1) du verrou (6) de maintien.

3. Dispositif de séparation selon la revendication 1, caractérisé par le fait que le relais (4) est un relais bistable qui, sous l'impulsion délivrée par le circuit (3) d'accumulation d'énergie, ferme un contact (5) de travail et actionne ainsi le déclencheur (1) du verrou (6) de maintien, et qui est ramené à son état initial par le processus de coupure le relais (4) grâce à un couplage (14) mécanique avec le verrou (6) de maintien.

4. Dispositif de séparation selon la revendication 1, caractérisé par le fait que le relais (4) est un relais bistable qui, sous l'impulsion délivrée par le circuit (3) d'accumulation d'énergie, ferme un contact (5) de travail et actionne ainsi le déclencheur (1) du verrou (6) de maintien, et par le fait qu'il est prévu, pour le réarmement du relais (4), une bobine d'actionnement (10) de relais supplémentaire qui est connectée aux lignes du réseau par l'intermédiaire d'un circuit (15) de temporisation.

5. Dispositif de séparation selon la revendication 1, caractérisé par le fait que le relais (4) est un relais bistable qui, sous l'impulsion délivrée par le circuit (3) d'accumulation d'énergie, ferme un contact (5) de travail et actionne ainsi le déclencheur (1) du verrou (6) de maintien, et par le fait qu'il est prévu, pour le réarmement du relais (4), seulement une bobine d'actionnement (10) qui est connectée non seulement au circuit (3) d'accumulation d'énergie mais encore aux lignes du réseau par l'intermédiaire d'un circuit (15) de temporisation.

6. Dispositif de séparation selon la revendication 1, caractérisé par le fait que le relais (4) est un relais monostable qui, sous l'impulsion délivrée par le circuit (3) d'accumulation d'énergie, ferme un contact (5) de travail et actionne ainsi le déclencheur (1) du verrou (6) de maintien, le relais restant par auto-maintien à travers un circuit qui est connecté aux lignes du réseau et forme un circuit de maintien, dans la position fermée jusqu'à ce que le dispositif de séparation soit coupé et qu'ainsi le circuit de maintien soit ouvert.

7. Dispositif de séparation selon la revendication 1, caractérisé par le fait que le relais (4) est un relais électronique dans lequel un commutateur à semi-conducteur est amené à l'état passant par l'impulsion délivrée par le circuit (3) d'accumulation d'énergie et revient à l'état bloquant après la commutation à l'état ouvert du dispositif de séparation.

8. Dispositif de séparation selon l'une des revendications 4 et 5, caractérisé par le fait que le circuit (15) de temporisation se compose d'un circuit redresseur (16), d'un condensateur d'accumulation (17) et d'un composant (18) électronique de commutation, asservi à la tension et est alimenté en énergie de manière asservie à la tension du réseau par l'intermédiaire d'une résistance (19) de charge.

9. Dispositif de séparation selon l'une des revendications 1 à 8, caractérisé par le fait que l'organe d'actionnement manuel pour le réarmement du mécanisme (6) de commutation est agencé seulement pour la fermeture et non pour l'ouverture du dispositif de séparation.

10. Dispositif de séparation selon l'une des revendications 1 à 9, caractérisé par le fait qu'il correspond à un disjoncteur à courant de défaut modifié, dans lequel les contacts d'interrupteur d'un ou de plusieurs trajets principaux de courant (9/1, 9/2, 9/3) sont utilisés pour la coupure des lignes (9a, 9d) communes de mise à la terre des dispositifs (21/1; 21/2, 21/3) de dérivation des surtensions.
